# EUROPEAN PATENT SPECIFICATION

(11) **EP 3 680 917 B1**
(45) Date of publication and mention of the grant of the patent: **04.10.2023**
(21) Application number: 19151658.2
(22) Date of filing: 14.01.2019
(51) Int. Cl.: G21C 3/07

(54) **A CLADDING TUBE FOR A FUEL ROD FOR NUCLEAR REACTORS**
HÜLLROHR FÜR EINEN BRENNSTAB FÜR KERNREAKTOREN
TUBE DE REVÊTEMENT DE BARRE DE COMBUSTIBLE POUR RÉACTEURS NUCLÉAIRES

(43) Date of publication of application: 15.07.2020
(73) Proprietor: Westinghouse Electric Sweden AB, 721 63 Västerås (SE)
(72) Inventor: BJERKE, Lars-Erik, 413 21 Göteborg (SE); EMBRING, Göran, 432 65 Väröbacka (SE); LAMPA, Conny, Höganäs 263 33 (SE); ANDERSSON, Tell, 432 37 Varberg (SE)
(74) Representative: Bjerkén Hynell KB

(56) References cited:
- WO-A1-2017/062332
- WO-A1-2018/194343
- CN-A- 108 588 532

## Description

### TECHNICAL FIELD OF THE INVENTION

The present invention refers to a cladding tube for a fuel rod for nuclear reactors, for instance water cooled reactors, including light water reactors such as Boiling Water Reactors, BWR, and Pressurized Water Reactors, PWR.

In particular, the invention refers to a cladding tube for a fuel rod for a nuclear reactor, the cladding tube comprising a tubular substrate defining an inner space for housing nuclear fuel, and a surface layer applied on the tubular substrate. The tubular substrate is made of a zirconium base alloy and has a first thermal expansion coefficient. The surface layer consists of an alloy. The alloy consists of
a major part of main elements comprising Cr and at least one of Nb and Fe,
a minor part of zirconium, and
possibly a residual part of interstitial elements.

The invention also refers to a fuel rod comprising a cladding tube, and to a fuel assembly comprising fuel rods.

### BACKGROUND AND PRIOR ART

A fuel rod for water cooled reactors typically comprises nuclear fuel of uranium, plutonium and/or thorium in the form of oxide, nitride or silicide pellets encapsulated in a cladding tube that may be several meters long. The cladding tube has a diameter of approximately 1 cm and is often made of a zirconium base alloy, such as Zircaloy-2, Zircaloy-4, ZIRLO, ZrSn, M5, E110, etc.

Zirconium base alloys, typically having a zirconium concentration of at least 98 weight-%, have good mechanical and neutron economy properties. However, zirconium base alloys may be sensitive to extremely high temperatures, and may in contact with steam or air oxidize exothermically, for example at a severe nuclear accident. Diffusion of hydrogen into the zirconium base alloy may result in hydration and a weakening of the strength of the cladding tube. At existing fuel rods, diffusion of hydrogen through a surface layer of zirconium dioxide, both during normal operation and in an accident situation, may form detrimental hydrides.

In order to remedy or reduce these problems of zirconium base alloys, it has been proposed to provide the cladding tube of the fuel rod with a surface layer applied to the outer surface of the cladding tube.

US 2015/0050521 discloses a multilayer material comprising a zirconium-based substrate covered with a multilayer coating, the multilayer coating comprising metallic layers composed of identical or different substances chosen from chromium, a chromium alloy or a ternary alloy of the Nb-Cr-Ti system. Such a material has an improved resistance to oxidation in accident conditions of a nuclear reactor.

WO2018/194343 discloses a nuclear fuel cladding comprising an inner and an outer tube with exterior surface layer. The thermal expansion coefficients of the inner and outer tube shall be similar.

CN108588532 discloses a zirconium alloy nuclear fuel cladding with an outer alloy coating of matching thermal expansion.

### SUMMARY OF THE INVENTION

The purpose of this invention is to improve the high temperature properties of nuclear fuel rods. More precisely, it is aimed at an improvement of the properties up to at least 1300°C, and in particular it is aimed at a so called Accident Tolerant Fuel, ATF.

This purpose is achieved by the cladding tube initially defined, which is characterized in that the alloy has a second thermal expansion coefficient and that the concentrations of the main elements are selected so that the second thermal expansion coefficient is at least 1% greater than the first thermal expansion coefficient from 20 to at least 1300°C.

When the cladding tube is heated to high temperatures, for instance in case of an accident, the difference in thermal expansion will cause compression stresses in the surface layer, which compression stresses improve the bonding and the adhesion of the surface layer to the tubular substrate and also improve the stress and corrosion resistance of the cladding tube.

The surface layer contributes efficiently to protect the zirconium base alloy of the tubular substrate from contact with oxygen and steam, and thus prevent corrosion and hydration. The surface layer may also protect the cladding tube against mechanical wear and fretting.

The cladding tube may thus form a candidate for Accident Tolerant Fuels, ATF.

The major part of the main elements comprises or consists of Cr and one of Nb and Fe. The alloy may have a Body Centered Cubic, BCC, structure. The BCC structure contributes to minimizing the diffusion of hydrogen into the zirconium base alloy of the tubular substrate.

The major part of main elements may typically constitute at least 94 weight-% of the alloy of the surface layer, preferably at least 95 weight-% of the alloy of the surface layer, more preferably at least 96 weight-% of the alloy of the surface layer, even more preferably at least 97 weight-% of the alloy of the surface layer, even more preferably at least 98 weight-% of the alloy of the surface layer and most preferably at least 99 weight-% of the alloy of the surface layer.

Cr is advantageous as a main element of the major part of the alloy because of its high resistance to corrosion and hydration. Nb and Fe, which also have good protective properties, provide the advantage of a relatively high thermal expansion coefficient of 7.31 × 10⁻⁶/°C and 11.76 × 10⁻⁶/°C, respectively, that is significantly greater than the first thermal coefficient of the zirconium base alloy of the tubular substrate.

According to an embodiment of the invention, the zirconium base alloy may have a concentration of Zr of at least 98 weight-%. The zirconium base alloy may thus, for instance, comprise one of Zircaloy-2, Zircaloy-4, ZIRLO, ZrSn, M5 and E110.

The presence of zirconium in the surface layer may improve the bonding and adhesion of the surface layer to the zirconium base alloy of the tubular substrate.

The minor part of zirconium may be obtained by an addition of zirconium to the surface layer in connection with the application of the surface layer to the substrate layer, in particular by an addition of powder of zirconium to powders of the main elements. Alternatively, the minor part of zirconium may be obtained by permitting zirconium to migrate from the zirconium base alloy of the tubular substrate to the surface layer, in particular in connection with the application of the surface layer to the tubular substrate.

According to an embodiment of the invention, the second thermal expansion coefficient is at least 2% greater than the first thermal expansion coefficient from 20 to at least 1300°C.

According to an embodiment of the invention, the thermal expansion of the alloy of the surface layer is at most 20%, or preferably at most 10%, greater than the first thermal expansion coefficient at 1300°C.

According to an embodiment of the invention, the minor part of zirconium of the surface layer constitutes 0.1-5 weight-% of the alloy of the surface layer.

According to an embodiment of the invention, the concentration of zirconium in the alloy of the surface layer increases towards the tubular substrate, and the concentration of the main elements in the alloy of the surface layer decreases towards the tubular substrate. In such a way a fusion zone will be created, which consists of both the main elements of the alloy and Zr. Such a fusion zone may improve the bonding and adhesion of the surface layer to the tubular substrate.

According to an embodiment of the invention, the major part of main elements of the surface layer consists of Cr and Nb.

In this embodiment, Cr may be present in the alloy with a concentration of 48-54 weight-%, for instance 51 weight-%, and Nb may be present in the alloy with a concentration of 44-50 weight-%, for instance 47 weight-%. The alloy of this embodiment may have neutron cross section 2.1 Barns, and linear thermal expansion 6.7 ×10⁻⁶/°C.

According to an embodiment of the invention, the major part of main elements of the surface layer consists of Cr, Mo and Nb.

In this embodiment, Cr may be present in the alloy with a concentration of 20-26 weight-%, for instance 23 weight-%, Nb may be present in the alloy with a concentration of 52-58 weight-%, for instance 55 weight-%, and Mo may be present in the alloy with a concentration of 16-22 weight-%, for instance 19 weight-%. The alloy of this embodiment may have neutron cross section 1.9 Barns, and linear thermal expansion 6.6 ×10⁻⁶/°C.

Mo is advantageous for balancing the thermal expansion of the alloy to suit the particular zirconium alloy of the tubular substrate. Mo has a thermal expansion coefficient of 4.9 × 10⁻⁶/°C

According to an embodiment of the invention, the major part of main elements of the surface layer consists of Cr, Mo and Fe.

In this embodiment, Cr may be present in the alloy with a concentration of 26-32 weight-%, for instance 29 weight-%, Mo may be present in the alloy with a concentration of 45-51 weight-%, for instance 48 weight-%, and Fe may be present in the alloy with a concentration of 17-23 weight-%, for instance 20 weight-%. The alloy of this embodiment may have neutron cross section 2.7 Barns, and linear thermal expansion 6.7 ×10⁻⁶/°C.

According to an embodiment of the invention, the surface layer has a thickness of at most 0.1 mm. In order to keep the absorption of thermal neutrons at an acceptable level to minimise the surface layer impact of the neutron economy of the fuel rod, it is important to keep the thickness of the surface layer low, i.e. less than 0.1 mm.

According to an embodiment of the invention, the surface layer has a thickness of at least 0.003 mm, at least 0.005 mm or at least 0.01 mm. This minimum thickness of the surface layer has been chosen to obtain a secure bonding to the substrate and satisfactory protective properties.

According to an embodiment of the invention, the surface layer is laser deposited and joined to the tubular substrate by a fusion bonding. The laser deposit gives the surface layer a fusion bonding to the zirconium base alloy of the tubular substrate and allows the creation of a surface texture that improves the heat convection of the fuel rods to the surrounding cooling water, at normal operation of the nuclear reactor.

Through the cold-rolling, a texture of the tubular substrate corresponding to, or substantially corresponding to, the texture of the tubular substrate before the laser deposition may be achieved. The cold-rolling may also contribute to achieve the desired thin thickness of the surface layer.

According to an embodiment of the invention, the interstitial elements of the residual part of the surface layer are present in the alloy with a concentration at a level, As Low As Reasonably Achievable, (ALARA principle). The total concentration of the interstitial elements may be less than 0.5 weight-%, preferably less than 0.4 weight-%, more preferably less than 0.3 weight-%, even more preferably less than 0.2 weight-%, and most preferably less than 0.1 weight-%.

The purpose is also achieved by a fuel rod comprising a cladding tube as described above, and nuclear fuel, especially in the form of nuclear fuel pellets, enclosed in the cladding tube.

Furthermore, the purpose is achieved by a fuel assembly comprising a plurality of fuel rods as described above. The fuel assembly may be configured for being inserted in a Light Water Reactor, especially a Boiling Water Reactor, a Pressurized Water Reactor or a Water-Water Energetic Reactor.

### BRIEF DESCRIPTION OF THE DRAWINGS

The invention is now to be explained more closely through a description of various embodiments and with reference to the drawings attached hereto.
- Fig 1: discloses schematically a longitudinal sectional view of a fuel assembly for a nuclear reactor.
- Fig 2: discloses schematically a longitudinal sectional view of a fuel rod of the fuel assembly in Fig 1.
- Fig 3: discloses schematically an enlarged longitudinal sectional view of a part of the fuel rod in Fig 2 comprising a tubular substrate and a surface layer.
- Fig 4: discloses a diagram schematically indicating the thermal expansion coefficients of the tubular substrate and the surface layer.
- Figs 5A-C: disclose a respective diagram schematically indicating the concentration of the elements of the surface layer as a function of the distance from the outer surface of the surface layer.

### DETAILED DESCRIPTION OF VARIOUS EMBODIMENTS

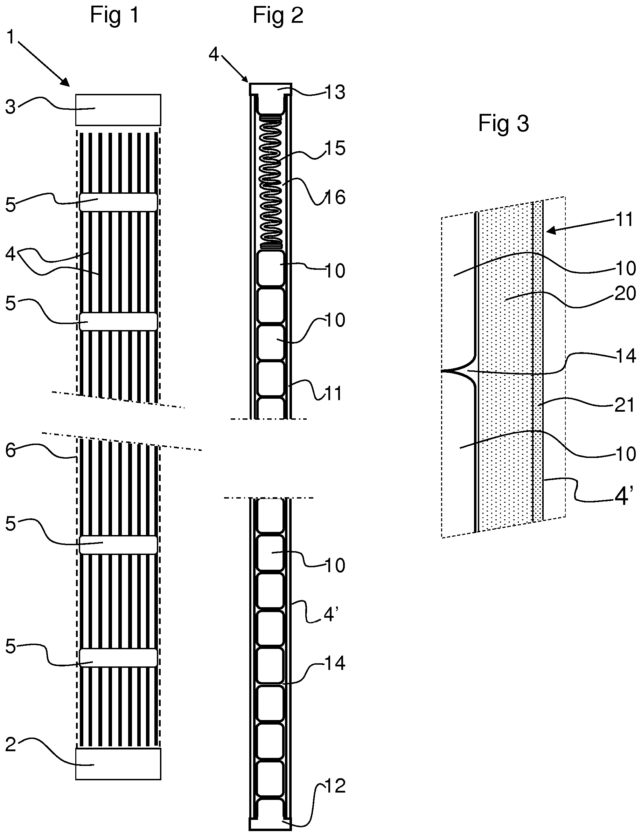

Fig. 1 discloses a fuel assembly 1 configured for being used in a nuclear fission reactor, in particular in a Light Water Reactor, LWR, such as a Boiling Water Reactor, BWR, or a Pressurized Water Reactor, PWR.

The fuel assembly 1 comprises a bottom member 2, a top member 3 and a plurality of elongated fuel rods 4 extending between the bottom member 2 and the top member 3. The fuel rods 4 are maintained in their positions by means of a plurality of spacers 5.

Furthermore, the fuel assembly 1 may, for instance when to be used in a BWR, comprise a flow channel or fuel box indicated by dashed lines 6 and surrounding the fuel rods 4.

Fig 2 discloses one of the fuel rods 4 of the fuel assembly 1 of Fig 1. The fuel rod 4 comprises a nuclear fuel, for instance in the form of a plurality of sintered nuclear fuel pellets 10, and a cladding tube 11 enclosing the nuclear fuel, in this case the nuclear fuel pellets 10. The fuel rod 4 comprises a bottom plug 12 sealing a lower end of the cladding tube 11, and a top plug 13 sealing an upper end of the cladding tube 11. The nuclear fuel pellets 10 are arranged in a pile in an inner space 14 of the cladding tube 11. The cladding tube 11 encloses the fuel pellets 10 and a gas in the inner space 14.

A spring 15 is arranged in an upper plenum 16 of the inner space 14 between the pile of nuclear fuel pellets 10 and the top plug 13. The spring 15 presses the pile of nuclear fuel pellets 10 against the bottom plug 12.

As can be seen in Fig 3, the cladding tube 11 comprises a tubular substrate 20 and a surface layer 21 applied on the tubular substrate 20. Preferably, the surface layer 21 forms an outer surface layer 4' of the fuel rod 4 extending circumferentially around the fuel rod 4.

The tubular substrate 20 defines the inner space 14 housing nuclear fuel pellets 10. The tubular substrate 20 is made of a zirconium base alloy, which may comprise at least 98 weight-% of Zr, such as Zircaloy-2, Zircaloy-4, ZIRLO, ZrSn, E110, and M5.

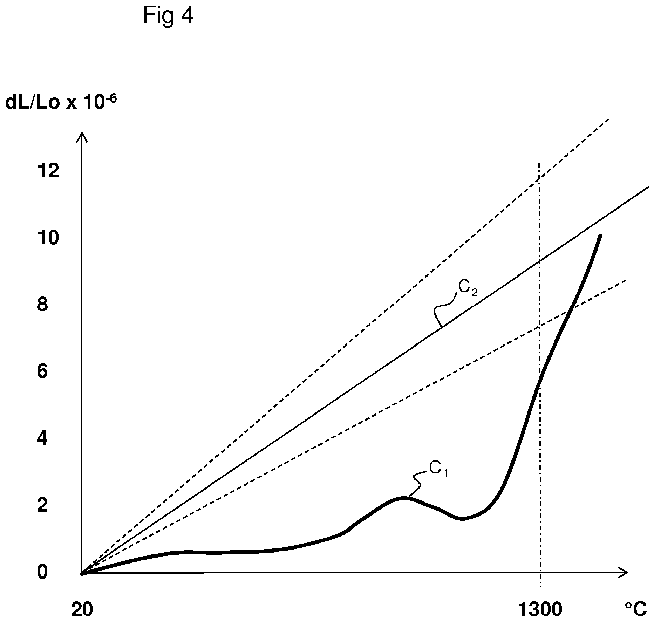

The tubular substrate 20 has a first thermal expansion coefficient C1, schematically illustrated in Fig 4. As can be seen, the first thermal expansion coefficient C₁ is not perfectly linear. This is due to the phase transformation from alpha phase to beta phase. The temperature range, at which the phase transformation occurs; may vary between various zirconium base alloys.

The surface layer 21 consists an alloy which alloy consists of a major part of main elements, a minor part of zirconium, and possibly a residual part of interstitial elements. The alloy of the surface layer 21 has a second thermal expansion coefficient C₂.

The major part of main elements of the alloy of the surface layer 21 comprises Cr and at least one of Nb and Fe, or consists of Cr, Mo and at least one of Nb and Fe.

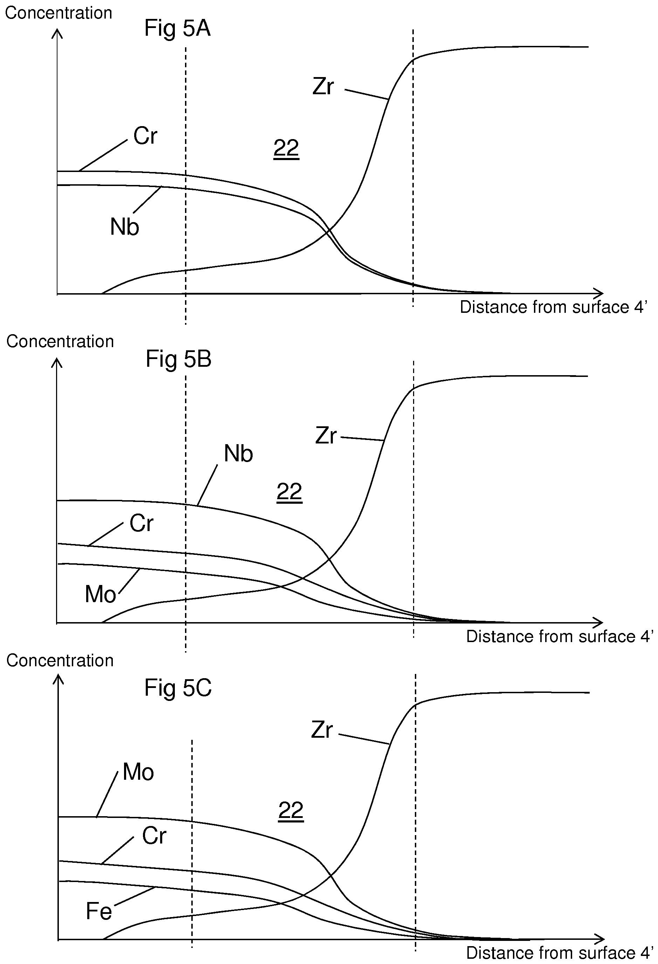

The minor part of zirconium of the surface layer 21 may constitute 0.1-5 weight-% of the alloy of the surface layer 21. This concentration may be an average concentration of Zr in the alloy of the surface layer 21. Preferably, the concentration of zirconium in the alloy of the surface layer 21 may increase towards the tubular substrate 20, and thus the concentration of the main elements in the alloy of the surface layer 21 may decrease towards the tubular substrate 20. This is schematically illustrated in Figs 5A-5C.

The possible interstitial elements of the residual part of the surface layer 21 are present in the alloy of the surface layer 21 with a concentration at a level that is, As Low As Reasonably Achievable, (ALARA principle). The total concentration of the interstitial elements may thus be less than 0.5 weight-%, preferably less than 0.4 weight-%, more preferably less than 0.3 weight-%, even more preferably less than 0.2 weight-%, and most preferably less than 0.1 weight-%.

The interstitial elements may thus comprise small or very small quantities of impurities and traces of further elements and substances than those defined above, i.e. than Cr, Fe, Nb, Mo and Zr. For instance, other elements than Zr, such as Sn, C, N, Si, O, etc., may migrate from the zirconium base alloy of the substrate 20 into the surface layer 21.

The concentrations of the main elements of the alloy of the surface layer 21 are selected so that the second thermal expansion coefficient C₂ is greater than the first thermal expansion coefficient C₁ from 20 to at least 1300°C.

Preferably, the second thermal expansion coefficient C₂ may be at least 1 % greater than the first thermal expansion coefficient C₁ from 20 to at least 1300°C.

More preferably, the second thermal expansion coefficient C₂ is at least 2% greater than the first thermal expansion coefficient C₁ from 20 to at least 1300°C.

As is illustrated in Fig 4, the second thermal expansion coefficient C₂ may vary within the range defined by the dashed lines depending of the concentrations of the selected main elements. The second thermal expansion coefficient C₂ is linear or approximately linear.

The surface layer 10 may have a thickness of at most 0.1 mm, and at least 0.003 mm, at least 0.005 mm or at least 0.01 mm.

The surface layer 21 may be laser deposited and joined to the tubular substrate 20 by a fusion bonding. The main elements, and possibly Zr, to be comprised by the surface layer 21 may be provided in powder form. A mixture of powders of the main elements, and possibly Zr, may be applied to the tubular substrate 20 and form the surface layer 21 by means of a laser.

By means of this laser deposit of the main elements, and possibly Zr, the above mentioned increase of the concentration of zirconium towards the tubular substrate 20, and decrease of the concentration of the main elements towards the tubular substrate 20 may be achieved.

The fusion bonding of the surface layer 21 is defined by a fusion zone 22 in which the concentration of the main elements decreases and the concentration of Zr increases. The fusion zone 22 is approximately illustrated in Figs 5A-5C, and located between the dashed lines in Figs 5A-5C.

The increase of the concentration of Zr in surface layer 21 and the fusion zone 22 will principally follow the lines in Figs 5A-5C irrespective of how Zr has been added, i.e. as a component of the powder to be laser deposited or if Zr atoms have migrated from the tubular substrate 20 towards the outer surface 4'.

In the following three different examples of suitable combinations of main elements of the major part of the alloy are presented. These three examples shall not be interpreted as excluding other examples of combinations of suitable main elements.

### Example 1

In example 1, the major part of main elements of the surface layer 21 consists of Cr and Nb. Cr may be present in the alloy with a concentration of 51 weight-%, and Nb may be present in the alloy with a concentration of 47 weight-%. Zr may be present in the alloy with a concentration of 2 weight-%.

The alloy of this example has neutron cross section of 2.1 Barns, or substantially 2.1 Barns, and linear thermal expansion of 6.7 ×10⁻⁶ /°C, or substantially 6.7 ×10⁻⁶ /°C.

The diagram of Fig 5A discloses schematically the variations of the concentrations of Cr, Nb and Zr in the surface layer 21 from the outer surface 4' to the tubular substrate 20.

Without deviating substantially from example 1, the concentration of Cr may lie in the range 48-54 weight-% and the concentration of Nb in the range 44-50 weight-%.

### Example 2

In example 2, the major part of main elements of the surface layer consists of Cr, Mo and Nb. Cr may then be present in the alloy with a concentration of 23 weight-%, Mo may be present in the alloy with a concentration of Mo may be present in the alloy with a concentration weight-%19 weight-% and Nb may be present in the alloy with a concentration of 55 weight-%.

The alloy of example 2 may have neutron cross section of 1.9 Barns, or substantially 1.9 Barns, and linear thermal expansion of 6.6 ×10⁻⁶ /°C, or substantially 6.6 ×10⁻⁶ /°C.

The diagram of Fig 5B discloses schematically the variations of the concentrations of Cr, Mo, Nb and Zr in the surface layer 21 from the outer surface 4' to the tubular substrate 20.

Without deviating substantially from example 2, the concentration of Cr may lie in the range 20-26 weight-%, the concentration of Mo in the range 16-22 weight-%, and the concentration of Nb in the range 52-58 weight-%.

### Example 3

In example 3, the major part of main elements of the surface layer consists of Cr, Mo and Fe. Cr may then be present in the alloy with a concentration of 29 weight-%, Mo may be present in the alloy with a concentration of 48 weight-%, and Fe may be present in the alloy with a concentration of 20 weight-%.

The alloy of example 2 may have neutron cross section of 2.7 Barns, or substantially 2.7 Barns, and linear thermal expansion of 6.7 ×10⁻⁶ /°C, or substantially 6.7 ×10⁻⁶ /°C.

The diagram of Fig 5C discloses schematically the variations of the concentrations of Cr, Mo, Fe and Zr in the surface layer 21 from the outer surface 4' to the tubular substrate 20.

Without deviating substantially from example 2, the concentration of Cr may lie in the range 26-32 weight-%, the concentration of Mo in the range 45-51 weight-%, and the concentration of Fe in the range 17-23 weight-%.

The present invention is not limited to the embodiments disclosed but may be varied and modified within the scope of the following claims.

## Claims

1. A cladding tube (11) for a fuel rod (4) for a nuclear reactor, the cladding tube (11) comprising a tubular substrate (20) defining an inner space (14) for housing nuclear fuel, and a surface layer (21) applied on the tubular substrate (20),
wherein the tubular substrate (20) is made of a zirconium base alloy and has a first thermal expansion coefficient, wherein the surface layer (21) consists of an alloy, and
wherein the alloy consists of
a major part of main elements comprising Cr and at least one of Nb and Fe,
a minor part of zirconium, and
possibly a residual part of interstitial elements,
**characterized in that**
the alloy of the surface layer (21) has a second thermal expansion coefficient and that the concentrations of the main elements are selected so that the second thermal expansion coefficient is at least 1% greater than the first thermal expansion coefficient from 20 to at least 1300°C.

2. A cladding tube (11) according to claim 1, wherein the second thermal expansion coefficient is at least 2% greater than the first thermal expansion coefficient from 20 to at least 1300°C.

3. A cladding tube (11) according to any one of claims 1 and 2, wherein the minor part of zirconium of the surface layer (21) constitutes 0.1-5 weight-% of the alloy of the surface layer.

4. A cladding tube (11) according to claim 3, wherein the concentration of zirconium in the alloy of the surface layer (21) increases towards the tubular substrate (20), and the concentration of the main elements in the alloy of the surface layer (21) decreases towards the tubular substrate (20).

5. A cladding tube (11) according to any one of the preceding claims, wherein the major part of main elements of the surface layer (21) consists of Cr and Nb.

6. A cladding tube (11) according to any one of the preceding claims, wherein the major part of main elements of the surface layer (21) consists of Cr, Mo and Nb.

7. A cladding tube (11) according to any one of the preceding claims, wherein the major part of main elements of the surface layer (21) consists of Cr, Mo and Fe.

8. A cladding tube (11) according to any one of the preceding claims, wherein the surface layer (21) has a thickness of at most 0.1 mm.

9. A cladding tube (11) according to any one of the preceding claims, wherein the surface layer (21) has a thickness of at least 0.003 mm.

10. A cladding tube (11) according to any one of the preceding claims, wherein the surface layer (21) is laser deposited and joined to the tubular substrate (20) by a fusion bonding.

11. A cladding tube (11) according to any one of the preceding claims, wherein the interstitial elements of the residual part of the surface layer (21) are present in the alloy with a concentration at a level, As Low As Reasonably Achievable, ALARA-Principle.

12. A fuel rod (4) comprising a cladding tube (11) according to any one of the preceding claims, and nuclear fuel enclosed in the cladding tube (11).

13. A fuel assembly (1) comprising a plurality of fuel rods (4) according to claim 12.

## Patentansprüche

1. Hüllrohr (11) für einen Brennstab (4) für einen Kernreaktor, wobei das Hüllrohr (11) ein rohrförmiges Substrat (20), das einen Innenraum (14) zum Aufnehmen von Kernbrennstoff definiert, und eine Oberflächenschicht (21), die auf dem rohrförmigen Substrat (20) aufgebracht ist, umfasst, wobei das rohrförmige Substrat (20) aus einer Legierung auf Zirkoniumbasis besteht und einen ersten Wärmeausdehnungskoeffizienten aufweist, wobei die Oberflächenschicht (21) aus einer Legierung besteht und wobei die Legierung zu einem großen Teil aus Hauptelementen, die Cr und mindestens eines von Nb und Fe umfassen, und zu einem kleinen Teil aus Zirkonium und möglicherweise einem restlichen Teil aus interstitiellen Elementen besteht,
**dadurch gekennzeichnet, dass**
die Legierung der Oberflächenschicht (21) einen zweiten Wärmeausdehnungskoeffizienten aufweist und dass die Konzentrationen der Hauptelemente derart ausgewählt werden, dass der zweite Wärmeausdehnungskoeffizient mindestens 1 % größer als der erste Wärmeausdehnungskoeffizient von 20 bis mindestens 1300 °C ist.

2. Hüllrohr (11) nach Anspruch 1, wobei der zweite Wärmeausdehnungskoeffizient mindestens 2 % größer als der erste Wärmeausdehnungskoeffizient von 20 bis mindestens 1300 °C ist.

3. Hüllrohr (11) nach einem der Ansprüche 1 und 2, wobei der kleine Teil von Zirkonium der Oberflächenschicht (21) aus 0,1-5 Gew.-% der Legierung der Oberflächenschicht besteht.

4. Hüllrohr (11) nach Anspruch 3, wobei die Konzentration von Zirkonium in der Legierung der Oberflächenschicht (21) in Richtung des rohrförmigen Substrats (20) zunimmt und die Konzentration der Hauptelemente in der Legierung der Oberflächenschicht (21) in Richtung des rohrförmigen Substrats (20) abnimmt.

5. Hüllrohr (11) nach einem der vorhergehenden Ansprüche, wobei der große Teil von Hauptelementen der Oberflächenschicht (21) aus Cr und Nb besteht.

6. Hüllrohr (11) nach einem der vorhergehenden Ansprüche, wobei der große Teil von Hauptelementen der Oberflächenschicht (21) aus Cr, Mo und Nb besteht.

7. Hüllrohr (11) nach einem der vorhergehenden Ansprüche, wobei der große Teil von Hauptelementen der Oberflächenschicht (21) aus Cr, Mo und Fe besteht.

8. Hüllrohr (11) nach einem der vorhergehenden Ansprüche, wobei die Oberflächenschicht (21) eine Dicke von höchstens 0,1 mm aufweist.

9. Hüllrohr (11) nach einem der vorhergehenden Ansprüche, wobei die Oberflächenschicht (21) eine Dicke von mindestens 0,003 mm aufweist.

10. Hüllrohr (11) nach einem der vorhergehenden Ansprüche, wobei die Oberflächenschicht (21) mit Laser auf das rohrförmige Substrat (20) aufgetragen und durch Schmelzverbinden damit verbunden wird.

11. Hüllrohr (11) nach einem der vorhergehenden Ansprüche, wobei die interstitiellen Elemente des restlichen Teils der Oberflächenschicht (21) in der Legierung mit einer Konzentration auf einem Niveau nach dem As-Low-As-Reasonably-Achievable-Prinzip, ALARA-Prinzip, vorhanden sind.

12. Brennstab (4), umfassend ein Hüllrohr (11) nach einem der vorhergehenden Ansprüche und Kernbrennstoff, der in dem Hüllrohr (11) eingeschlossen ist.

13. Brennstoffbaugruppe (1), umfassend eine Vielzahl von Brennstäben (4) nach Anspruch 12.

## Revendications

1. Tube de gainage (11) pour une tige de combustible (4) pour un réacteur nucléaire, le tube de gainage (11) comprenant un substrat tubulaire (20) définissant un espace interne (14) pour loger du combustible nucléaire, et une couche de surface (21) appliquée sur le substrat tubulaire (20),
dans lequel le substrat tubulaire (20) est constitué d'un alliage à base de zirconium et présente un premier coefficient de dilatation thermique,
dans lequel la couche de surface (21) est constituée d'un alliage, et
dans lequel l'alliage est constitué
d'une majeure partie d'éléments principaux comprenant du Cr et au moins un parmi Nb et Fe,
d'une partie mineure de zirconium, et
facultativement d'une partie résiduelle d'éléments interstitiels,
**caractérisé en ce que**
l'alliage de la couche de surface (21) présente un second coefficient de dilatation thermique, et **en ce que** les concentrations des éléments principaux sont sélectionnées de telle sorte que le second coefficient de dilatation thermique soit supérieur d'au moins 1% au premier coefficient de dilatation thermique entre 20 et au moins 1 300°C.

2. Tube de gainage (11) selon la revendication 1, dans lequel le second coefficient de dilatation thermique est supérieur d'au moins 2 % au premier coefficient de dilatation thermique entre 20 et au moins 1 300°C.

3. Tube de gainage (11) selon l'une quelconque des revendications 1 et 2, dans lequel la partie mineure de zirconium de la couche de surface (21) constitue 0,1 à 5 % en poids de l'alliage de la couche de surface.

4. Tube de gainage (11) selon la revendication 3, dans lequel la concentration de zirconium dans l'alliage de la couche de surface (21) augmente vers le substrat tubulaire (20), et la concentration des éléments principaux dans l'alliage de la couche de surface (21) diminue vers le substrat tubulaire (20).

5. Tube de gainage (11) selon l'une quelconque des revendications précédentes, dans lequel la majeure partie d'éléments principaux de la couche de surface (21) est constituée de Cr et de Nb.

6. Tube de gainage (11) selon l'une quelconque des revendications précédentes, dans lequel la majeure partie d'éléments principaux de la couche de surface (21) est constituée de Cr, Mo et Nb.

7. Tube de gainage (11) selon l'une quelconque des revendications précédentes, dans lequel la majeure partie d'éléments principaux de la couche de surface (21) est constituée de Cr, Mo et Fe.

8. Tube de gainage (11) selon l'une quelconque des revendications précédentes, dans lequel la couche de surface (21) présente une épaisseur d'au plus 0,1 mm.

9. Tube de gainage (11) selon l'une quelconque des revendications précédentes, dans lequel la couche de surface (21) présente une épaisseur d'au moins 0,003 mm.

10. Tube de gainage (11) selon l'une quelconque des revendications précédentes, dans lequel la couche de surface (21) est déposée par laser et reliée au substrat tubulaire (20) par une liaison par fusion.

11. Tube de gainage (11) selon l'une quelconque des revendications précédentes, dans lequel les éléments interstitiels de la partie résiduelle de la couche de surface (21) sont présents dans l'alliage avec une concentration à un niveau de principe ALARA, aussi bas que raisonnablement possible.

12. Tige de combustible (4) comprenant un tube de gainage (11) selon l'une quelconque des revendications précédentes, et du combustible nucléaire enfermé dans le tube de gainage (11).

13. Ensemble de combustible (1) comprenant une pluralité de tiges de combustible (4) selon la revendication 12.
